# EUROPÄISCHE PATENTSCHRIFT

(11) **EP 0 644 133 B1**
(45) Veröffentlichungstag und Bekanntmachung des Hinweises auf die Patenterteilung: **19.03.1997**
(21) Anmeldenummer: 94113333.2
(22) Anmeldetag: 25.08.1994
(51) Int. Cl.: B65G 17/42, B65G 19/24

(54) **Förder-Gelenkkette und Fördervorrichtung**
Conveyor link chain and conveying device
Chaîne articulée de transport et dispositif de transport

(30) Priorität: 21.09.1993 DE 9314261 U
(43) Veröffentlichungstag der Anmeldung: 22.03.1995
(73) Patentinhaber: JOH. WINKLHOFER & SÖHNE GmbH & Co KG, D-81369 München (DE)
(72) Erfinder: Heinrich, Dag, D-82377 Penzberg (DE)
(74) Vertreter: Grünecker, Kinkeldey, Stockmair & Schwanhäusser Anwaltssozietät

(56) Entgegenhaltungen:
- DE-U- 7 737 243
- DE-U- 8 232 383
- FR-A- 2 415 944
- GB-A- 1 586 049
- AUSZ GE AUS DEN GEBRAUCHS- MUSTERN, 20. Jahrgang, Heft 20, 19. Mai 1983 WILLA-Verlag-MUnchen Seite 725
- SOVIET INVENTIONS ILLUSTRATED, Sektion PQ, Woche 9142, 4. Dezember 1991 DERWENT PUBLICATIONS LTD., London; & SU-A-1608 099

## Beschreibung

Die Erfindung betrifft eine Förder-Gelenkkette gemäß dem Oberbegriff des Patentanspruchs 1 sowie eine Fördervorrichtung gemäß dem Oberbegriff des Patentanspruchs 11.

Eine aus DE-U-82 32 383 bekannte Förder-Gelenkkette einer Fördervorrichtung weist einen Adapter mit in benachbarte Hohlbolzen eingesteckten Stiften auf. Die Stifte sind über eine Adapterlasche verbunden, die an der dem Mitnehmer gegenüberliegenden Seite der Gelenkkette an den Hohlbolzen ansteht. Der eine Bolzen ist verlängert. Auf sein überstehendes Ende ist eine Adapterhülse aufgepreßt, die am Hohlbolzen anliegt und den Adapter an der Gelenkkette lagesichert. In die Adapterhülse ist der Schaft des Mitnehmers eingepreßt, so daß zwischen dem Mitnehmerschaft und der Förder-Gelenkkette eine starre Verbindung hergestellt ist. Im Betrieb werden durch Kettenräder, Umlenkräder oder Spannräder Kraftimpulse in die Gelenkkette eingeleitet, die zu relativ hochfrequenten Schwingungen der Förder-Gelenkkette führen. Diese Schwingungen werden über den Adapter auf den Mitnehmer übertragen, der zu Eigenbewegungen angeregt wird. Daraus resultieren Reaktionskräfte zwischen dem Mitnehmer und dem Adapter bzw. zwischen dem Adapter und der Förder-Gelenkkette, die in der Praxis zu Schäden, insbesondere an der Gelenkkette, führen.

Bei einer aus FR-A-2 415 944 (DE-U-77 37 243) bekannten Fördervorrichtung ist der Mitnehmer an der Förder-Gelenkkette mittels eines Adapterstiftes befestigt, der einen Hohlbolzen durchsetzt, mit einer Schulter und einer Sicherungskappe am Hohlbolzen lagegesichert ist. Der Adapterstift ist mit dem Schaft des Mitnehmers einstückig und im Hohlbolzen dünn mit temperaturbeständigem Kunststoff mit niedrigem Reibbeiwert beschichtet. Die Kunststoffschicht liegt der Innenwand des Hohlbolzens mit radialem Spiel gegenüber, so daß sich der Mitnehmer mit dem Adapterstift im Hohlbolzen drehen läßt. Die Kunststoffschicht definiert eine Gleitlageroberfläche. Im Betrieb in der Förder-Gelenkkette kette erzeugte Schwingungen werden auf den Mitnehmer übertragen, so daß dieser zu Eigenbewegungen angeregt wird, die zu hohen Belastungen und ggs. Schäden führen können.

Dabei ist zu berücksichtigen, daß solche Förder-Gelenkketten eine länge von mehreren 100m haben und mit Geschwindigkeiten von bis zu 5m/s und mehr angetrieben werden können. Funktionsstörungen durch Schäden an der Kette oder im Verbindungsbereich des Mitnehmers mit der Gelenkkette führen zum teuren Stillstand der Fördervorrichtung und zu aufwendigen Reparaturen, wobei auch gegebenenfalls der Fördervorrichtung vor- oder nachgeschaltete weitere Maschinen angehalten werden müssen.

Der Erfindung liegt die Aufgabe zugrunde, eine FörderGelenkkette der eingangs genannten Art zu schaffen, die sich durch eine erhöhte Standzeit auszeichnet, sowie eine Fördervorrichtung anzugeben, bei der Betriebsstörungen aufgrund schwingungsbedingter Schäden an der Förderkette oder den Mitnehmern vermieden oder zumindest minimiert werden.

Die gestellte Aufgabe wird erfindungsgemäß mit den Merkmalen des Patentanspruchs 1 oder mit den Merkmalen des Patentanspruchs 12 gelöst.

Bei der angegebenen Ausbildung der Förder-Gelenkkette ist der Mitnehmer gegenüber der mit den Schwingungen beaufschlagten Gelenkkkette entkoppelt und abgedämpft. Das Dämpfglied zehrt kinetische Energie auf, unterbricht bzw. beeinträchtigt die Schwingungsübertragung in beiden Richtungen, und verhindert auf diese Weise eine schädliche Einwirkung des Mitnehmers auf die Gelenkkette, da gummi oder Elastomer energieaufzehrende Eigenschaften haben und die notwendige Elastizität erbringen.

Die Dämpfglieder lassen sich einfach und formgenau herstellen oder durch Ablängen vorbestimmter Abschitte von einem Schlauch bilden. Die Standzeit der Förder-Gelenkkette wird deutlich erhöht. Die Bewegungs- und Kraftübertragung ist dennoch uneingeschränkt gegeben. Wenn der Mitnehmer zu Bewegungen angeregt werden sollte, dann liegen diese phasenverschoben zu den Schwingungen in der Gelenkkette, so daß sich die gegenseitigen Schwingungen zumindest zum Teil aufzehren. Speziell die bisher zu beobachtenden Schäden an den Hohlbolzen werden vermieden.

Bei der Ausführungsform gemäß Anspruch 2 erfolgt die Schwingungsdämpfung möglichst nahe an oder sogar innerhalb der Gelenkkette, je nachdem, wie der Adapter angebracht ist.

Bei der Ausführungsform gemäß Anspruch 3 erfolgt die Schwingungsdämpfung zwischen dem Mitnehmer und dem Adapter.

Eine bevorzugte Ausführungsform geht aus Anspruch 4 hervor. Trotz der einfachen Befestigung des Adapters an der Hohlbolzen-Gelenkkette wirk jedes Dämpfglied im kinematischen Bewegungsübertragungsweg zum Mitnehmer und innerhalb des Hohlbolzens. Schäden am Hohlbolzen hervorrufende Einwirkungen des Mitnehmers werden unterbunden. Mit zwei axial beabstandeten Dämpfgliedern wird die Dämpfwirkung günstig verteilt.

Baulich einfach ist die Ausführungsform gemäß Anspruch 5. Die Dämpfglieder werden in die Umfangsnuten eingeknüpft, ehe der Adapaterstift in den Hohlbolzen eingeschoben wird. Dank der Dämpfungsvorrichtung läßt sich der Adapter universell für Hohlbolzenketten verschiedener Ausführungen nutzen. Der Adapter läßt sich an beliebigen Positionen an der Hohlbolzenkette montieren und ist ohne spezielles Werkzeug austauschbar. Der für die Funktion des Mitnehmers notwendige Preßsitz des Adapterstiftes ist auch bei Toleranzschwankungen zwischen dem Hohlbolzen und dem Adapterstift gewährleistet. Die Dämpfglieder können ausgetauscht werden.

Bei der Ausführungsform gemäß Anspruch 6 überbrücken die Dämpfglieder ein durch den Gleitsitz gegebenes Spiel zwischen dem Adapterstift und dem Hohlbolzen. Durch den in den Hohlbolzen eingreifenden Bund bzw. durch beide eingreifende Bunde wird - wenn die Dämpfglieder verformt werden - eine feste Abstützung des Adapterstiftes im Hohlbolzen erreicht. Dies verhindert, daß der Mitnehmer stärkere Eigenbewegungen ausführt, und der Adapterstift im Eintrittsbereich in den Hohlbolzen bricht. Die Dämpfglieder sollen dämpfen, wenn der Mitnehmer, z.B. durch Resonanzwirkung, in etwa synchron mit der Gelenkkette schwingt, Dem Aufbau kräftiger Schwingungen des Mitnehmers ist wirksam entgegengetreten. Diese Präventivmaßnahme wird dadurch nicht beeinträchtigt, daß sich unter höheren Kräften am Mitnehmer der Adapterstift mittels der Bunde direkt am Hohlbolzen abstützt.

Eine baulich einfache und kostengünstige Lösung geht aus Anspruch 7 hervor.

Eine alternative Ausführungsform ist aus Anspruch 8 zu entnehmen. Die Dämpfvorrichtung wirkt zwischen dem Halteteil des Mitnehmers und dem Adpater. Die Verbindung des Adapters mit dem Gelenkkette kann herkömmlich ausgebildet sein. Die schädliche Rückwirkung von Schwingungen des Mitnehmers auf die Gelenkkette wird unterbunden.

Die Ausführungsform gemäß Anspruch 9 ist wichtig. Die physikalischen Eigenschaften und die Temperaturfestigkeit des Dämpfgliedes ermöglichen es, die Förder-Gelenkkette unter extremen Arbeitsbedingungen einzusetzen.

Wichtig ist ferner die Maßnahme von Anspruch 10, weil durch die Vorspannung des Dämpfgliedes eine hervorragende Dämpfung erreicht wird, wobei die Vorspannung durch die Dimensionierung des Dämpfgliedes beim Einsetzen in den Hohlbolzen oder in die Aufnahme entsteht.

Die Fördervorrichtung gemäß Anspruch 11 arbeitet über lange Standzeiten sehr zuverlässig, weil Betriebsstörungen durch schwingungsbedingte Schäden mittels jedes Dämpfgliedes vermieden werden.

Die Ausführungsform der Fördervorrichtung nach Anspruch 12 hat nicht nur den Vorteil, daß die Fördervorrichtung störungssicher arbeitet, weil schwingungsbedingte Betriebsstörungen (mechanische Schäden an den Gelenkketten) durch die Dämpfglieder vermieden werden, sondern weil die Dämpfglieder zusätzlich Ungleichförmigkeiten im Synchronlauf beider Förder-Gelenkketten kompensieren.

Anhand der Zeichnung werden Ausführungsformen der Erfindung erläutert. Es zeigen:
- Fig. 1: einen Abschnitt einer Förder-Gelenkkette mit einem Mitnehmer in einer Fördervorrichtung,
- Fig. 2: in Draufsicht schematisch ein Detail einer anderen Fördervorrichtung,
- Fig. 3: eine Detailvariante zu Fig. 1, und

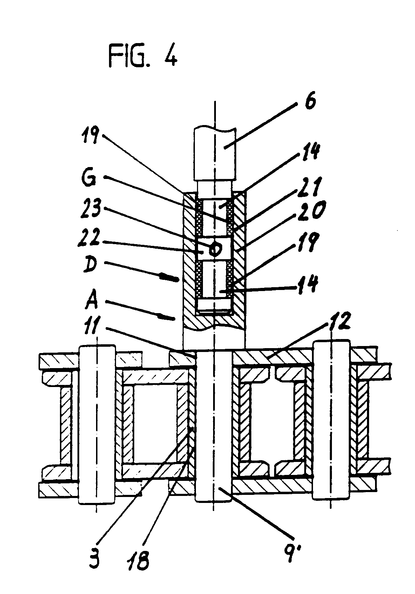

- Fig. 4: eine weitere Detailvariante.

In einer Fördervorrichtung V ist eine Förder-Gelenkkette F mit wenigstens einem stabförmigen Mitnehmer M vorgesehen. Solche Fördervorrichtungen können einsträngige oder mehrsträngige Kettenförderer sein, die z.B. beim Lackieren oder Beschichten von Getränkedosen, Tuben oder dgl. und dort zum Fördern der Dosen durch Lackier- oder Beschichtungsvorrichtungen sowie in und durch Heizeinrichtungen benutzt werden. Die Dosen oder Tuben werden mit ihrem offenen Ende auf die Mitnehmer gesteckt, die mit vorbestimmter Teilung an der Gelenkkette befestigt sind. Zumeist ist die Mitnehmerteilung größer als die Gelenkteilung der Förder-Gelenkkette. Es ist aber auch denkbar, an jedem Gelenk der Gelenkkette einen Mitnehmer vorzusehen.

Die Förder-Gelenkkette F weist zwei beabstandete Innenlaschen 1 zwischen Außenlaschen 2 auf, wobei in den Innenlaschen in jedem Gelenk ein Hohlbolzen 3 befestigt ist, auf dem eine Rolle 4 drehbar gelagert sein kann. Die Innenlaschen 1 werden mit den Außenlaschen 2 durch Gelenkbolzen 5 verbunden.

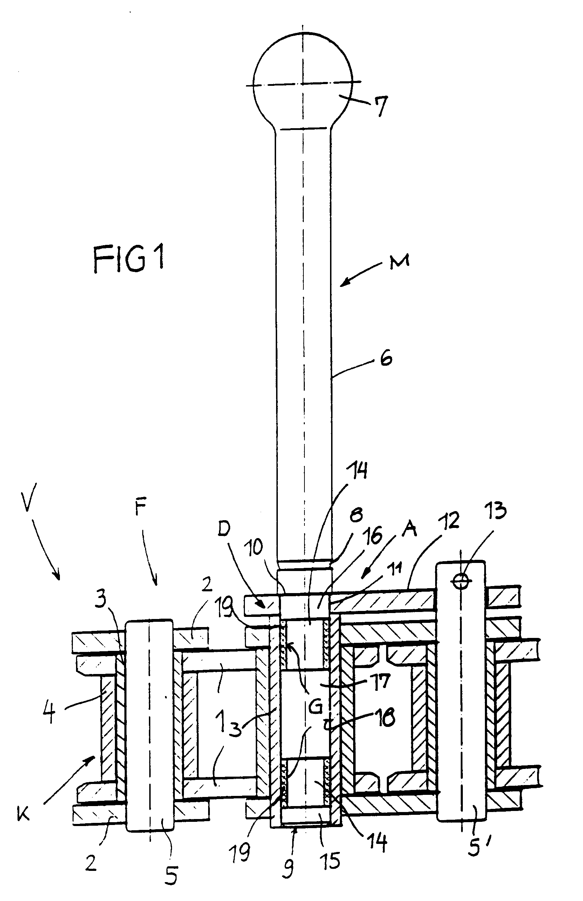

In Fig. 1 ist im mittleren Gelenk anstelle eines Gelenkbolzens 5 der Mitnehmer M mit einem Adapterstift 9 gelagert, der einstückig mit einem Schaft 6 des einen Kopf 7 aufweisenden Mitnehmers verbunden ist. Im Übergangsbereich vom Schaft 6 zum Adapterstift 9 ist eine umlaufende Nut 8 als Sollbruchstelle vorgesehen. Der Schaft 6 ist bis zur Anlage einer Schulter 10 in eine Bohrung 11 einer Adapterlasche 12 eingepreßt, die an einem verlängerten Gelenkbolzen 5' mittels einer Sicherungseinrichtung 13 lagegesichert ist und an einem Ende des verlängert ausgebildeten Hohlbolzens 3 anliegt. Der Gelenkbolzen 5' ist, z.B., vernietet.

Die Adapterlasche 12 bildet mit dem Adapterstift 9 und der Sicherungsvorrichtung 13 einen Adapter A, mittels dessen der Mitnehmer M mit der Förder-Gelenkkette F verbunden ist, wobei die Förder-Gelenkkette F auf einer Hohlbolzen-Gelenkkette K aufbaut. Der Hohlbolzen 3, in den der Adapterstift 9 eingesteckt ist, ist gegenüber den anderen Hohlbolzen 3 in normalen Gelenken der Hohlbolzen-Gelenkkette K nach beiden Seiten verlängert ausgebildet, so daß er durch die Außenlaschen 2 nach außen reicht.

Zwischen dem Adapter A und der Hohlbolzen-Gelenkkette K ist in Fig. 1 eine Schwingungsdämpfungsvorrichtung D vorgesehen. In der Dämpfungsvorrichtung D sind bei der gezeigten Ausführungsform zwei axial beabstandete Dämpfglieder G aus elastischem, dämpfungsfähigem Werkstoff, z.B. Gummi oder Elastomer, in axial beabstandete Umfangsnuten 14 des Adapterstiftes 9 eingeknüpft. Die Dämpfungsglieder G sind beispielsweise Schlauchabschnitte 19, die durch Abschneiden von einem Schlauch hergestellt sein können. Die Dämpfglieder G sind mit radialer Vorspannung zwischen dem Adpaterstift 9 und der mit 18 bezeichneten Innenwand des Hohlbolzens 3 eingespannt.

Am Adapterstift 9 liegt zwischen der oberen Umfangsnut 14 und der Schulter 10 ein erster Bund 16 und vor der zweiten Umfangsnut 14 ein zweiter Bund 15 vor. Zwischen den Umfangsnuten 14 liegt ein weiterer Bund 17 vor. Der Außendurchmesser jedes Bundes 15, 16, 17 ist derart auf den Innendurchmesser der Innenwand 18 des Hohlbolzens 3 abgestimmt, daß höchstens ein Gleitsitz des Adapterstiftes 9 im Hohlbolzen 3 erreicht wird.

Bei einem Mitnehmer mit einem Schaft 6, dessen Außendurchmesser größer als oder in etwa gleich dem Innendurchmesser des Hohlbolzens 3 ist, ist es wichtig, daß zumindest der Bund 16, der an die Schulter 10 angrenzt, noch in den Hohlbolzen 3 eingreift, zweckmäßigerweise auch der andere Bund 15.

Der Werkstoff der Dämpfglieder G kann wärmebständig bis ca. 300°C, und beständig gegen Säuren, Laugen oder Gase sein. Die Dämpfglieder G sind so dimensioniert, daß sie beim Einstecken des Adapterstiftes 9 unter Vorspannung gesetzt werden. Dabei ist der Bewegungswiderstand beim Einstecken zweckmäßigerweise nur so groß, daß der Adapterstift 19 ohne Zuhilfenahme eines Spezialwerkzeuges eingeführt und herausgezogen werden kann.

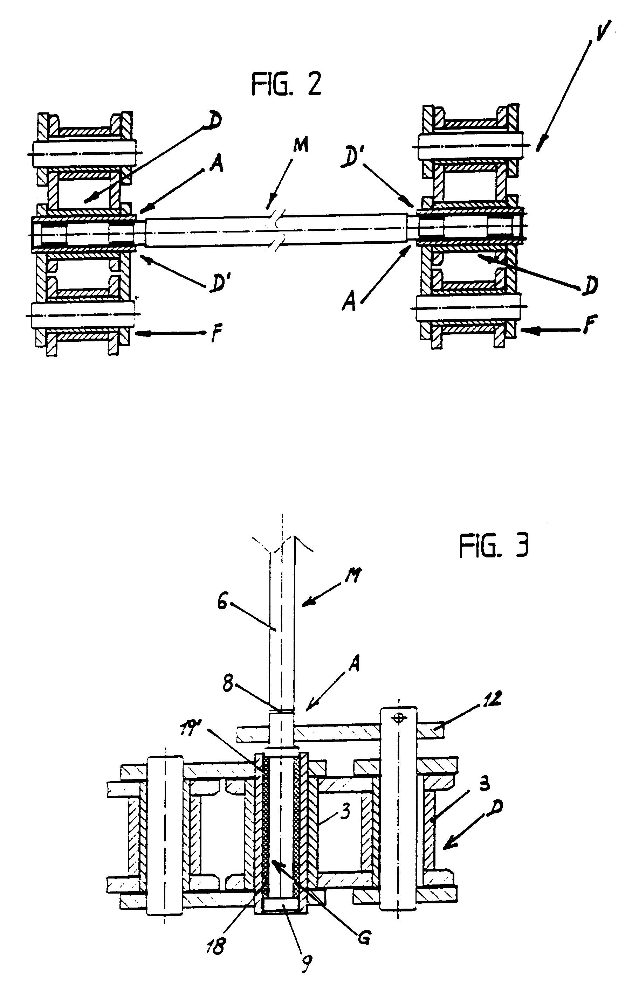

Bei der Ausführungsform gemäß Fig. 3, die weitgehend der Ausführungsform von Fig. 1 entspricht, ist ein einziges Dämpfglied G, das ein Schlauchabschnitt 19' ist, in dem Hohlbolzen 3 mit radialer Vorspannung gehalten. Das Dämpfglied erstreckt sich nahezu über die gesamte Länge der Innenwand 18 des Hohlbolzen 3. Diese Ausführung kann dann zweckmäßig sein, wenn der Außendurchmesser des Schaftes 6 des Mitnehmers kleiner als der Außendurchmesser des Adapterstiftes 9 ist. Ferner wäre es denkbar, bei besonders langen Hohlbolzen auch mehr als zwei Dämpfglieder vorzusehen.

Bei der Ausführungsform gemäß Anspruch 4 ist der Schaft 6 des Mitnehmers mit einem an seinem Ende angeformten Halteteil 22 in einer Aufnahme 21 einer Adapterfassung 20 des Adpaters A in der zu Fig. 1 erwähnten Weise befestigt, wobei die Dämpfungsvorrichtung D zwischen der Adapterfassung 20 und dem Halteteil 22 vorgesehen ist. Der Adapterstift 9' ist hingegen im Kohlbolzen 3 direkt gelagert und mittels der Adapterlasche 12 lagegesichert. Die Dämpfglieder G sind in die Umfangsnuten 14 des Halteteils 22 eingeknüpft und radial vorgespannt. Als Ausziehsicherung des Schaftes 6 kann ein Splint 23 oder dgl. vorgesehen sein, wobei es wichtig ist, daß diese Ausziehsicherung spielbehaftet ist, wie auch die Sicherung der Adapterlasche 12 in Fig. 1 am verlängerten Gelenkbolzen 5'. Dieses Spiel ist erforderlich, um die Dämpfungsvorrichtung nicht starr zu überbrücken.

In Fig. 2 ist eine Fördervorrichtung V mit zwei in etwa parallelen Gelenk-Förderketten F angedeutet, zwischen denen sich quer ein durchgehender Mitnehmer M erstreckt. Der Mitnehmer M ist mit beiden Förder-Gelenkketten durch Adapter A verbunden. An jeder Seite des Mitnehmers ist eine Schwingungsdämpfungsvorrichtung D vorgesehen, die entweder wie bei D zwischen dem Adapter und der Förder-Gelenkkette F oder wie bei D' zwischen dem Mitnehmer und jedem Adapter A vorgesehen sein kann. Mit den Schwingungsdämpfungsvorrichtungen D, D' wird nicht nur der schädliche Einfluß der Schwingungen minimiert, sondern werden auch geringfügige Abweichungen im Gleichlauf der beiden Gelenk-Förderketten über die elastischen Dämpfglieder kompensiert.

Dämpfvorrichtungen der vorerwähnten Art können auch bei Förder-Gelenkketten oder Fördervorrichtungen verwendet werden, bei denen der Mitnehmer auf andere Art mit der jeweiligen Gelenkkette verbunden ist. Ferner lassen sich solche Dämpfungsvorrichtungen auch für Adapter benutzen, die auf andere Weise, als gezeigt, an der Gelenkkette lagegesichert werden. So könnte z.B. der Adapterstift 9 in Fig. 1 am unteren Ende verlängert und dort mit einer Sicherung versehen sein. Dann könnte die Adapterlasche 12 weggelassen werden und der Adapterstift direkt mit der Schulter 10 am oberen Ende des Hohlbolzens 3 abgestützt sein. Jedoch ist dann wichtig, daß die Abstützung des Adapterstiftes 9 an beiden Enden des Hohlbolzens spielbehaftet ist, so daß der Adapterstift 9 in der Lage ist, sich relativ zum Hohlbolzen 3 zumindest geringfügig zu bewegen und den Mitnehmer M von der Gelenkkette K zur Schwingungsdämpfung zu entkoppeln.

## Patentansprüche

1. Förder-Gelenkkette (K), mit wenigstens einem Mitnehmer (M), der mittels eines Adapters (A) kraft- und bewegungsübertragend mit der Gelenkkette (K) verbunden ist, **dadurch gekennzeichnet**, daß zwischen dem Mitnehmer (M) und der Gelenkkette (K) eine Schwingungsdämpfvorrichtung (D) mit mindestens einem unter Vorspannung stehenden Dämpfglied (G) aus gummi oder Elastomer vorgesehen ist, und daß jedes Dämpfglied (G) ein elastischer Schlauchabschnitt oder ein ring- oder zylinderförmiges elastisches Formteil (19) ist.

2. Förder-Gelenkkette nach Anspruch 1, **dadurch gekennzeichnet**, daß das Dämpfglied (G) zwischen dem Adapter (A) und der Gelenkkette (K) vorgesehen ist.

3. Förder-Gelenkkette nach Anspruch 1, **dadurch gekennzeichnet**, daß das Dämpfglied (G) zwischen dem Mitnehmer (M) und dem Adapter (A) vorgesehen ist.

4. Förder-Gelenkkette nach den Ansprüchen 1 und 2, **dadurch gekennzeichnet**, daß die Gelenkkette (K) eine Hohlbolzen-Gelenkkette ist, daß der Adapter (A) einen Adapterstift (9) aufweist, der höchstens mit einem Gleitsitz in einen Hohlbolzen (3) eingesteckt ist, und daß zwischen dem Adapterstift (9) und der Innenwand (18) des Hohlbolzens (3) das wenigstens eine Dämpfglied (G), vorzugsweise zwei axial beabstandete Dämpfglieder (G), mit radialer Vorspannung vorgesehen ist bzw. sind.

5. Förder-Gelenkkette nach Anspruch 4, **dadurch gekennzeichnet**, daß der Adapterstift (9) zwei axial beabstandete Umfangsnuten (14) aufweist, und daß in den Umfangsnuten (14) je ein ringförmiges Dämpfglied (G) angeordnet ist.

6. Förder-Gelekkette nach den Ansprüchen 4 und 5, **dadurch gekennzeichnet**, daß jede Umfangsnut (14) vom benachbarten Ende des Hohlbolzens (3) axial beabstandet ist, daß der Adapterstift (9) angrenzend an jede Umfangsnut (14) und zwischen den Umfangsnuten (14) je einen Bund (16, 15, 17) aufweist, dessen Außendurchmesser relativ zum Innendurchmesser des Hohlbolzens (3) ein höchstens einen Gleitsitz definierendes Untermaß besitzt, und daß zumindest der dem Mitnehmer (M) zugewandte Bund (16), vorzugsweise auch der beim gegenüberliegenden Hohlbolzenende liegende Bund (15), zumindest teilweise in den Hohlbolzen (3) eingreift.

7. Förder-Gelenkkette nach den Ansprüchen 4 bis 6, **dadurch gekennzeichnet**, daß der Adapterstift (9) ein verlängertes Ende des Mitnehmers (M) ist, der mit einem Schaft (6) in einer an der Hohlbolzen-Gelenkkette lagesicherbaren Adapterlasche (12) befestigt, vorzugsweise in diese eingepreßt, ist.

8. Förder-Gelenkkette nach den Ansprüchen 1 und 3, **dadurch gekennzeichnet**, daß die Gelenkkette (K) eine Hohlbolzen-Gelenkkette ist, daß der an der Hohlbolzen-Gelenkkette lagesicherbare Adapter (A) eine Adapterfassung (20) mit einer Aufnahme (21) für ein Halteteil (22) des Mitnehmerschafts (6) aufweist, daß das Halteteil (22) höchstens mit einem Gleitsitz in die Aufnahme (19) eingesteckt ist, und daß zwischen dem Halteteil (22) und der Innenwand der Aufnahme (19) das wenigstens eine vorgespannte Dämpfglied (G) angeordnet ist.

9. Förder-Gelenkkette nach wenigstens einem der Ansprüche 1 bis 8, **dadurch gekennzeichnet**, daß das Dämpfglied (G) aus bis ca 300°C temperatur- und laugen-, säure- und gasbeständigem, Gummi oder Elastomer besteht.

10. Förder-Gelenkkette nach wenigstens einem der Ansprüche 4 bis 9, **dadurch gekennzeichnet**, daß das Dämpfglied (G) derart bemessen ist, daß es durch Einstecken in den Hohlbolzen (3) oder in die Aufnahme (19) unter radiale Vorspannung setzbar ist.

11. Fördervorrichtung (F) mit wenigstens einer zu einer Längs- oder Kurvenbewegung antreibbaren Förder-Gelenkkette (K) gemäß Anspruch 1.

12. Fördervorrichtung nach Anspruch 11, **dadurch gekennzeichnet**, daß der wenigstens eine Mitnehmer (M) zwischen zwei beabstandeten und im wesentlichen parallel zueinander geführten Förder-Gelenkketten (F) vorgesehen und mit jeder Förder-Gelenkkette (F) mittels eines des Adapters (A) bewegungsübertragend verbunden ist, und daß zwischen dem Mitnehmer (M) und jeder Förder-Gelenkkette (F) die Schwingungsdampfvorrichtung (D) vorgesehen ist.

## Claims

1. Conveyor link chain (K) having at least one carrier (M) which is connected to the link chain (K) in a manner transmitting force and movement by means of an adapter (A), characterised in that between the carrier (M) and the link chain (K) a vibration damping device (D) having at least one damping member (G) under initial tension made of rubber or elastomer is provided and that each damping member (G) is an elastic section of tubing or an annular or cylindrical elastic moulded part.

2. Conveyor link chain according to Claim 1, characterised in that the damping member (G) is provided between the adapter (A) and the link chain (K).

3. Conveyor link chain according to Claim 1, characterised in that the damping member (G) is provided between the carrier (M) and the adapter (A).

4. Conveyor link chain according to Claims 1 and 2, characterised in that the link chain (K) is a hollow bolt link chain, that the adapter (A) has an adapter pin (9) which is plugged in at most with a sliding fit into a hollow bolt (3) and that between the adapter pin (9) and the inner wall (18) of the hollow bolt (3) the at least single damping member (G), preferably two axially spaced damping members (G), is or are provided with radial initial tension.

5. Conveyor link chain according to Claim 4, characterised in that the adapter pin (9) has two axially spaced circumferential grooves (14) and that in each of the circumferential grooves (14) an annular damping member (G) is arranged.

6. Conveyor link chain according to Claims 4 and 5, characterised in that every circumferential groove (14) is axially spaced from the neighbouring end of the hollow bolt (3), that adjacent to every circumferential groove (14) and between the circumferential grooves (14) each adapter pin (9) has a collar (16, 15, 17), the outer diameter of which is undersized relative to the inner diameter of the hollow bolt (3) to an extent defining at most a sliding fit, and that at least the collar (16) facing towards the carrier (M), preferably also the collar (15) located at the opposite end of the hollow bolt, engages at least partially in the hollow bolt (3).

7. Conveyor link chain according to Claims 4 to 6, characterised in that the adapter pin (9) is an elongated end of the carrier (M) which is fastened with a shaft (6) in an adapter shackle (12) capable of being secured in position on the hollow bolt link chain, preferably pressed into the latter.

8. Conveyor link chain according to Claims 1 and 3, characterised in that the link chain (K) is a hollow bolt link chain, that the adapter (A) capable of being secured in position on the hollow bolt link chain has an adapter mounting (20) with a receptacle (21) for a retaining part (22) of the carrier shaft (6), that the retaining part (22) is plugged into the receptacle (19) at most with a sliding fit, and that the at least single initially tensioned damping member (G) is arranged between the retaining part (22) and the inner wall of the receptacle (19).

9. Conveyor link chain according to at least one of Claims 1 to 8, characterised in that the damping member (G) consists of rubber or elastomer resistant to temperatures of up to about 300°C, alkali solutions, acids and gases.

10. Conveyor link chain according to at least one of Claims 4 to 9, characterised in that the damping member (G) is of such a size that it can be set under radial initial tension by plugging it into the hollow bolt (3) or into the receptacle (19).

11. Conveyor device (F) having at least one conveyor link chain (K) according to Claim 1 capable of being driven in a longitudinal or curved movement.

12. Conveyor device according to Claim 11, characterised in that the at least single carrier (M) is provided between two spaced conveyor link chains (F) guided essentially parallel to one another and is connected in a manner transmitting movement to each conveyor link chain (F) by means of the adapter, and that the vibration damping device (D) is provided between the carrier (M) and each conveyor link chain (F).

## Revendications

1. Chaîne articulée (K) de convoyeur, comprenant au moins un entraîneur (M) relié à la chaîne articulée (K) au moyen d'un adaptateur (A) de manière à transmettre les forces et les mouvements,
caractérisée en ce qu'un dispositif amortisseur (D) des vibrations est prévu entre l'entraîneur (M) et la chaîne articulée (K), ledit dispositif amortisseur comportant au moins un élément amortisseur (G) en caoutchouc ou en une matière élastomère, mis sous précontrainte, et en ce que chaque élément amortisseur (G) est un tronçon de tuyau élastique ou une pièce profilée élastique (19) en forme d'anneau ou de cylindre.

2. Chaîne articulée de convoyeur selon la revendication 1, caractérisée en ce que l'élément amortisseur (G) est prévu entre l'adaptateur (A) et la chaîne articulée (K).

3. Chaîne articulée de convoyeur selon la revendication 1, caractérisée en ce que l'élément amortisseur (G) est prévu entre l'entraîneur (M) et l'adaptateur (A).

4. Chaîne articulée de convoyeur selon les revendications 1 et 2, caractérisée en ce que la chaîne articulée (K) est une chaîne articulée à axes creux, en ce que l'adaptateur (A) comporte une goupille (9) d'adaptateur, qui s'emboîte dans un axe creux (3) avec, au plus, un jeu d'ajustage coulissant, et en ce que ledit au moins un élément amortisseur (G), de préférence deux éléments amortisseurs (G) axialement espacés l'un de l'autre, est/sont prévu(s) avec une certaine précontrainte radiale entre la goupille (9) d'adaptateur et la paroi intérieure (18) de l'axe creux (3).

5. Chaîne articulée de convoyeur selon la revendication 4, caractérisée en ce que la goupille (9) d'adaptateur comporte deux gorges périphériques (14) axialement espacées l'une de l'autre, et en ce que respectivement un élément amortisseur (G) en forme d'anneau est disposé dans chacune des gorges périphériques (14).

6. Chaîne articulée de convoyeur selon les revendications 4 et 5, caractérisée en ce que chaque gorge périphérique (14) est axialement espacée de l'extrémité adjacente de l'axe creux (3), en ce que la goupille (9) d'adaptateur comporte, de façon adjacente à chaque gorge périphérique (14) et entre les gorges périphériques (14), respectivement une collerette (16, 15, 17), dont le diamètre extérieur présente un écart en moins par rapport au diamètre intérieur de l'axe creux (3), qui définit tout au plus un ajustage coulissant, et en ce qu'au moins la collerette (16) faisant face à l'entraîneur (M), et de préférence aussi la collerette (15) située à l'extrémité opposée de l'axe creux, s'engage(nt) au moins partiellement dans l'axe creux (3).

7. Chaîne articulée de convoyeur selon les revendications 4 à 6, caractérisée en ce que la goupille (9) d'adaptateur est une extrémité prolongée de l'entraîneur (M), qui est fixée au moyen d'une tige (6), de préférence emmanchée avec serrage, dans un maillon d'adaptateur (12) dont la position est fixée sur la chaîne articulée à axes creux.

8. Chaîne articulée de convoyeur selon les revendications 1 et 3, caractérisée en ce que la chaîne articulée (K) est une chaîne articulée à axes creux, en ce que l'adaptateur (A) pouvant être immobilisé sur la chaîne articulée à axes creux comporte un fourreau adaptateur (20) comprenant une partie réceptrice (21) pour un élément de maintien (22) de la tige (6) de l'entraîneur, en ce que l'élément de maintien (22) est emmanché dans la partie réceptrice (19) avec, au plus, un jeu d'ajustage coulissant, et en ce que ledit au moins un élément amortisseur précontraint (D) est disposé entre l'élément de maintien (22) et la paroi intérieure de la partie réceptrice (19).

9. Chaîne articulée de convoyeur selon l'une au moins des revendications 1 à 8, caractérisée en ce que l'élément amortisseur (G) est réalisé en caoutchouc ou une matière élastomère résistant à des températures pouvant atteindre près de 300°C et résistant aux liquides alcalins, acides et aux gaz.

10. Chaîne articulée de convoyeur selon l'une au moins des revendications 4 à 9, caractérisée en ce que l'élément amortisseur (G) est dimensionné de manière telle qu'il puisse être installé avec une certaine précontrainte radiale par emmanchement dans l'axe creux (3) ou dans la partie réceptrice (19).

11. Dispositif convoyeur (F) comprenant au moins une chaîne articulée (K) de convoyeur selon la revendication 1, pouvant être entraînée en un mouvement longitudinal ou en ligne de courbe.

12. Dispositif convoyeur selon la revendication 11, caractérisé en ce que ledit au moins un entraîneur (M) est prévu entre deux chaînes articulées (F) de convoyeur, espacées l'une de l'autre et guidées essentiellement parallèlement l'une à l'autre, et est relié à chaque chaîne articulée (F) de convoyeur par l'intermédiaire d'un adaptateur (A) de façon à transmettre les mouvements, et en ce que le dispositif amortisseur (D) de vibrations est prévu entre l'entraîneur (M) et chacune des chaînes articulées (F) de convoyeur.
